# EUROPEAN PATENT APPLICATION

(11) **EP 2 746 165 A1**
(43) Date of publication of application: **25.06.2014**
(21) Application number: 13178472.0
(22) Date of filing: 30.07.2013
(51) Int. Cl.: B65B 5/10, B65B 5/12, B65G 54/02

(54) **Device for gripping and transferring individual products**

(30) Priority: 24.12.2012 IT TO20121141
(71) Applicant: Cavanna S.p.A., 28077 Prato Sesia (NO) (IT)
(72) Inventor: Brolli, Elio, I-28077 Prato Sesia (Novara) (IT); Guidetti, Dario, I-28077 Prato Sesia (Novara) (IT)
(74) Representative: Marchitelli, Mauro

(57) **Abstract**

Device for gripping and transferring individual products (P), comprising:
- a belt (12) on which the individual products (P) are randomly arranged,
- a conveyor (14) carrying a plurality of supports (16) for groups of products, and
- a plurality of manipulators (18) programmed to pick up the individual products (P) from the belt (12) and to deposit the products (P) on said supports (16) so as to form ordered groups (G) of products on said supports (16),

wherein said conveyor (14) is formed by a linear motor including:
- a loop stator (20) having two parallel straight branches (24, 26) joined together by two curved branches (28), and
- a plurality of movers (22) movable independently from each other along the stator (20) and carrying said supports (16).

## Description

### Field of the invention

The present invention relates to the packaging of products and refers to a device for gripping and transferring individual products, suitable for forming ordered groups of products from a continuous stream in which different types of individual products are arranged randomly.

### Description of the prior art

In the packaging sector, for example of foodstuffs, it is frequently necessary to form ordered groups of products from a flow of different types of randomly-arranged products. For example, the flow of individual products could be formed from different types of confectionery products which must be packaged into groups with a specific composition of different products. For this type of application, gripping and transferring devices are used comprising a belt for advancing a continuous flow of randomly-arranged individual products, a conveyor having a plurality of supports on which ordered groups of products are composed and a plurality of manipulators programmed to pick up the individual products from the tape and to deposit the products in the seats of the conveyor in a predetermined order, so as to form a continuous succession of ordered groups of products on the conveyor.

The document EP-A-0856465 describes a device for gripping and transferring individual products wherein the containers that receive the ordered groups of products move in a counterflow direction with respect to the movement of individual loose products.

The document DE-A-102011014697 describes a device for gripping and transferring individual products wherein the containers for the ordered groups of products are moved independently from each other.

The fact of independent advancing of the containers during their filling allows the speed of the individual containers to be varied and even enables the halting or retraction of the individual containers depending on the availability of the loose products. This allows the complete filling of the containers even in cases where the flow of individual loose products is irregular.

However, the independent movement of the individual containers involves considerable complications from a construction point of view. The document DE-A-102011014697 envisages initial and terminal modules which transfer carriages from a feed rail to a return rail and vice versa.

### Object and summary of the invention

The present invention aims to provide a device for gripping and transferring individual products that enables the independent control of the movement of ordered groups of products with a simpler structure.

According to the present invention, this object is achieved by a device having the characteristics forming the subject of Claim 1.

The claims form an integral part of the disclosure provided in relation to the invention.

### Brief description of the drawings

The present invention will now be described in detail with reference to the attached drawings, provided purely by way of non-limiting example, wherein:

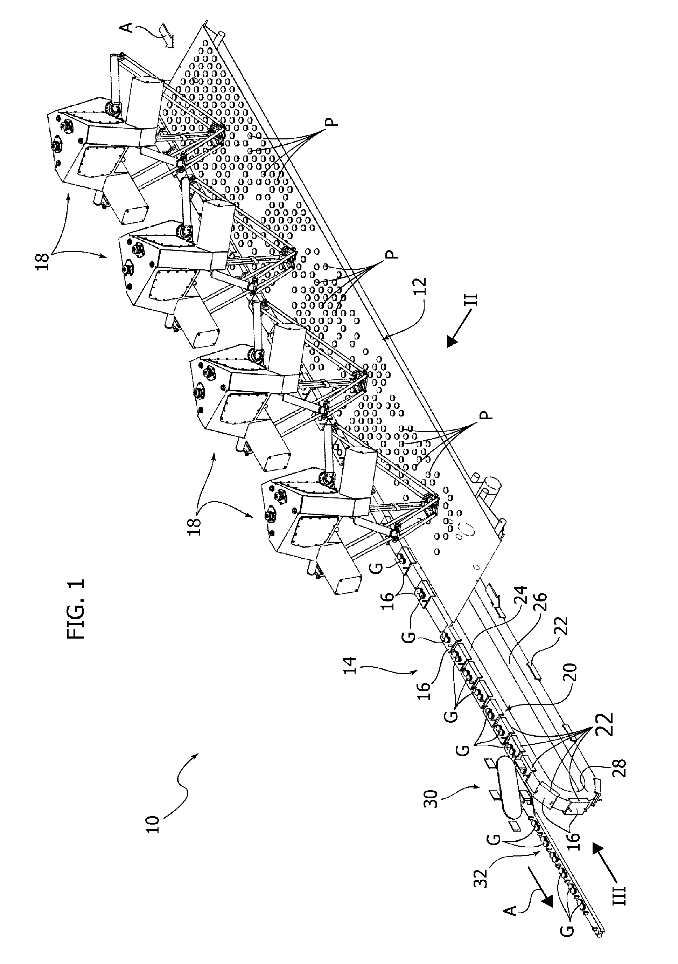

- Figure 1 is a schematic perspective view of a device according to the present invention,

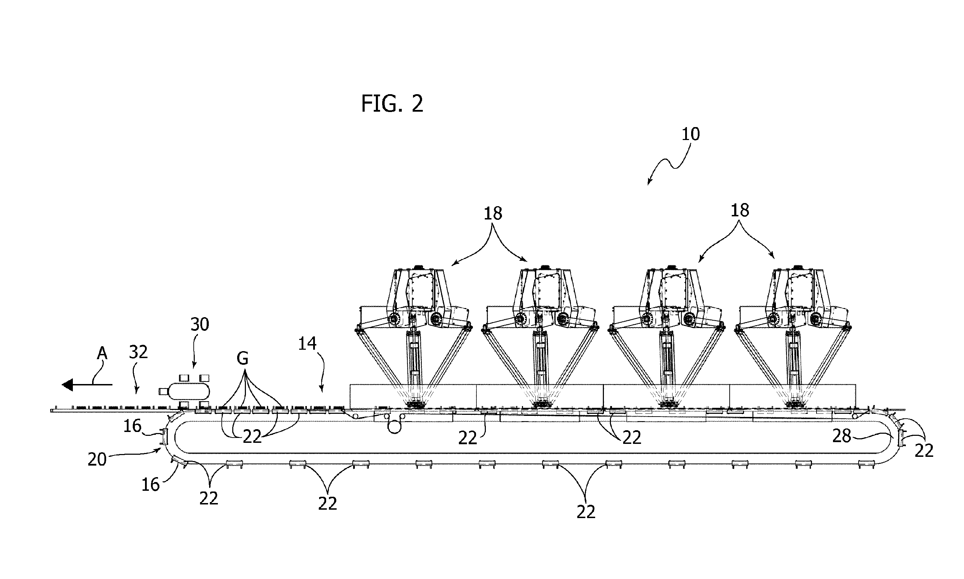

- Figure 2 is a side view according to the arrow II of Figure 1, and

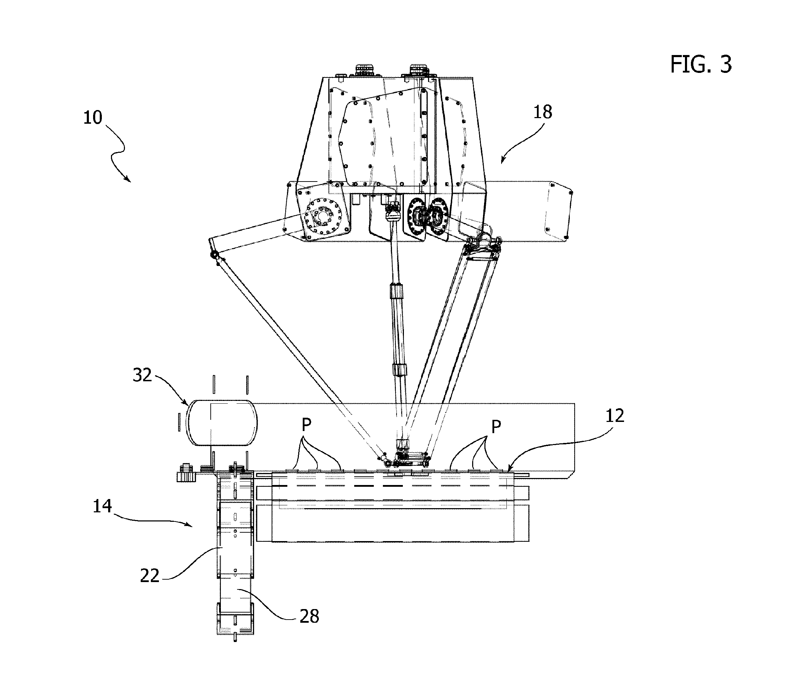

- Figure 3 is a frontal view according to the arrow III of Figure 1.

### Description of embodiments of the invention

With reference to the drawings, numeral 10 indicates a device for gripping and transferring individual products. The device 10 comprises a conveyor belt 12 moving in the direction indicated by the arrow A. Individual loose products P of different types are randomly arranged on the conveyor belt 12.

The device 10 comprises a conveyor 14 having a plurality of supports 16 configured to receive ordered groups G of products.

The device 10 comprises a plurality of manipulators 18 programmed to pick up the individual products P from the belt 12 and to deposit the products P on the supports 16, so as to form the ordered groups G of products.

According to the present invention, the conveyor 14 comprises a linear motor including a loop stator 20 and a plurality of movers 22 movable along the stator 20 independently from each other. The movers 22 have respective supports 16 for receiving the ordered groups G of products.

The stator 20 comprises two straight branches 24, 26 parallel to each other. The two straight branches 24, 26 are joined together by two curved sections 28. In the illustrated example the upper branch 24 is a conveying branch and the lower branch 26 is a return branch.

The linear motor forming the conveyor 14 may be a linear synchronous motor (LSM) for example produced by Jacobs Automation LLC. The movers 22 of the linear motor are movable independently from each other and are individually controlled in a coordinated manner with the manipulators 18 according to the flow of individual loose products P.

When there are very few products P in the work area of a manipulator 18 the movers 22 which are located in this work area slow down in order to give the manipulators 18 more time to find the products P necessary to form the ordered groups of products of each mover 22. If in an instant any of the manipulators 18 is devoid of products P in its work area, it also has the ability to temporarily stop one or more movers 22 in the work area in question, in order to wait for the manipulator in question to receive the products needed to complete the groups of products on the movers located in the respective work area. Conversely, if one of the manipulators 18 has many products P in its work area, the control causes the movers 22 to accelerate calling upon empty movers 22 in order to have a greater availability of free positions for the products on the movers 22 located in work areas with larger quantities of product.

A transfer device 30 is arranged at a terminal zone of the conveyor 14 which transfers the ordered groups G of products by the movers 22 onto a second conveyor 32 on which a continuous succession of ordered groups G of products is formed that are conveyed towards a packaging machine in the direction indicated by arrow A. Downstream of the transfer device 30, the empty movers 22 are transmitted to the return branch 26 of the stator 20 and return empty to the opposite end of the conveying branch 24. Alternatively, the conveyor 14 may directly feed a packaging machine, without envisaging for the transfer of ordered groups of products G onto a second conveyor.

Each mover 22 can receive one or more ordered groups G of products. The movers 22 could also carry containers in which the groups G of products are intended to be positioned in an orderly way.

Of course, without prejudice to the principle of the invention, the details of construction and the embodiments may be widely varied with respect to those described and illustrated without thereby departing from the scope of the invention as defined by the claims that follow.

## Claims

1. Device for gripping and transferring individual products (P), comprising:
- a belt (12) on which the individual products (P) are randomly arranged,
- a conveyor (14) carrying a plurality of supports (16) for groups of products, and
- a plurality of manipulators (18) programmed to pick up the individual products (P) from the belt (12) and to deposit the products (P) on said supports (16) so as to form ordered groups (G) of products on said supports (16),
**characterised in that** said conveyor (14) is formed by a linear motor including:
- a loop stator (20) having two parallel straight branches (24, 26) joined together by two curved branches (28), and
- a plurality of movers (22) movable independently from each other along the stator (20) and carrying said supports (16).

2. Device according to claim 1, **characterised in that** it comprises a transfer device (30) located at one end of said conveyor (14) and configured to transfer said ordered groups of products (G) from said supports (16) to a second conveyor (32) so as to form a continuous succession of ordered groups (G) of products on said second conveyor (32).

3. Device according to claim 1, **characterised in that** said conveyor (14) feeds directly into a packaging machine.

4. Device according to claim 1, **characterised in that** said linear motor is a linear synchronous motor (LSM).

5. Device according to any one of the preceding claims, **characterised in that** the movement of said movers (22) along the stator (20) is controlled according to the flow of individual products (P) in the work areas of said manipulators (18).
